Europäisches Patentamt

(19) European Patent Office     (11) Numéro de publication: **0 198 847**

Office européen des brevets                         **B1**

(12)          # FASCICULE DE BREVET EUROPÉEN

(45) Date de publication du fascicule du brevet: 07.02.90

     (21) Numéro de dépôt: 85904791.2

     (22) Date de dépôt: 11.10.85

     (86) Numéro de dépôt international: PCT/CH 85/00153

     (87) Numéro de publication international: WO 86/02305 (24.04.86 Gazette 86/09)

(51) Int. Cl. ⁵: **B 23 Q 41/04**, B 23 Q 37/00, **B 23 Q   1/02**

(54) **MACHINE-OUTIL MODULAIRE POUR L'USINAGE DE PIECES EN SERIE DANS UNE BARRE.**

(30) Priorité: 16.10.84 CH 4942/84

(43) Date de publication de la demande: 29.10.86 Bulletin 86/44

(45) Mention de la délivrance du brevet: 07.02.90 Bulletin 90/06

(84) Etats contractants désignés:
AT BE CH DE FR GB IT LI LU NL SE

(56) Documents cité:
CH-A-379 879
CH-A-500 809
DE-A-1 906 566
DE-A-3 207 076
FR-A-1 238 130
FR-A-1 406 665
FR-A-2 145 065
GB-A-1 582 337
US-A-3 800 383

(73) Titulaire: JEAN GREUB S.A.
147, rue Jardinière
CH-2300 La Chaux-de-Fonds (CH)

(72) Inventeur: LOPEZ, Angel
Tilleuls 1
CH-2206 Les Geneveys-sur-Coffrane (CH)

(74) Mandataire: Nithardt, Roland
CABINET ROLAND NITHARDT 15, rue Edouard Verdan
CH-1400 Yverdon-les-Bains (CH)

EP 0 198 847 B1

LIBERGRAF, STOCKHOLM 1990

## Description

La présente invention concerne une machine-outil modulaire pour l'usinage de pièces en série dans une barre de matière première, cette machine comportant au moins un module d'usinage, un dispositif pour transporter et maintenir la barre de matière première, et un dispositif pour apposer des repères d'indexage sur cette barre, ledit moule d'usinage comportant des moyens de repérage par rapport aux repères d'indexage sur la barre et au moins une unité d'usinage équipée d'organes d'entraînement indépendants conçus pour déplacer cette unité selon trois axes orthogonaux par rapport à la barre de matière première.

Les machines-out ils modernes, du type à commande numérique, dans laquelle les pièces à usiner subissent des transferts linéaires ou circulaires commandés par ordinateur, peuvent être considérées comme étant des perfectionnements dérivant des machines-outils traditionnelles dans lesquelles les pièces à usiner sont mises en place puis retirées manuellement. Toutefois, les principes généraux mis en application dans ces deux générations de machines restent les mêmes. En effet, dans les deux cas, la matière première est débitée, éventuellement préoeuvrée pour former une ébauche, cet te ébauche est ensuite mise en place dans des éléments de prépositionnement destinés à la maintenir en position pendant l'usinage, puis usinée pour aboutir à la pièce définitive. Les éléments de prépositionnement sont constitués par des gabarits adaptés à chaque pièce particulière à usiner. Ces gabarits doivent être conçus et réalisés en fonction des pièces et ne peuvent en général pas être réutilisés pour d'autres pièces.

En outre, les machines a commande numérique nécessitent des unités de transfert linéaire ou circulaire comportant des mécanismes compliqués et qui doivent être adaptés à la forme et aux dimensions des pièces à usiner.

Ces problèmes bien connus engendrent une limitation des cadences de production et sont à l'origine d'un coût d'usinage des pièces relativement élevé malgré l'automatisation des opérations de transfert de pièces et d'usinage proprement dit.

En outre, la complexité de ces machines essentiellement conçues pour la fabrication de grandes séries de pièces rend la mise en fabrication de chaque nouvelle série de pièces lente et compliquée et diminue considérablement leur souplesse d'utilisation, de sorte que l'entreprise se trouve contrainte de fabriquer de grandes quantités de pièces et de constituer ainsi des stocks importants, ce qui présente souvent un risque non négligeable pour la gestion de cette entreprise.

Pour simplifier les opérations de transfert et pour faciliter le passage d'une série à une autre, on a conçu des machines modulaires, comportant plusieurs modules d'usinage pouvant être changés et préparés à l'avance pour une nouvelle fabrication. Par exemple, le brevet CH-A-500 809 décrit une machine-outil modulaire du type indiqué en préambule, comportant un bâti pourvu de rails le long desquels sont répartis plusieurs chariots dont les uns portent chacun un module d'usinage et les autres portent des moyens de support et d'avancement de la barre de matière première. Les modules d'usinage peuvent fonctionner indépendamment les uns des autres. Ils sont montés de manière flottante, grâce à des ressorts, sur leurs chariots respectifs et ils se positionnent par rapport à la barre au moyen de tiges coniques d'indexage qui s'engagent dans des trous d'indexage ménagés dans la barre.

Cette machine présente toutefois des inconvénients. Le montage des modules d'usinage sur des chariots circulant sur une voie commune ne permet pas de modifier rapidement le nombre et/ou la disposition des modules ou de remplacer aisément l'un d'eux. En outre, l'utilisation de chariots particuliers pour supporter et avancer la barre complique la machine, augmente sa longueur et accroît les pertes de matière aux extrémités des barres. D'autre part, le dispositif proposé ne permet pas de fixer l'unité d'usinage par rapport à la barre de manière suffisamment rigide pour permettre l'utilisation d'une unité d'usinage mobile selon trois axes orthogonaux. Un autre inconvénient est le fait que les rails reçoivent des copeaux et s'encrassent.

La présente invention se propose de pallier les inconvénients susmentionnés grâce à une machine-outil du type mentionné en préambule, permettant de réduire sensiblement le temps et le coût de mise en fabrication d'une nouvelle série tout en assurant une grande précision de l'usinage, caractérisée en ce que le module d'usinage comporte un châssis rigide équipé d'une poutre porteuse longitudinale, rectiligne et disposée parallèlement a la barre de matière première agencée pour supporter ladite unité d'usinage et pour assurer, le cas échéant, la liaison rigide entre plusieurs modules d'usinage, et en ce que ladite unité d'usinage est montée sur un support coulissant ayant la forme générale d'un U renverse, disposé à cheval sur la poutre porteuse longitudinale.

De préférence, ledit châssis rigide comporte un bâti inférieur formant un caisson et un bâti supérieur en forme de prisme, le bâti inférieur étant conçu pour contenir au moins une installation de lubrification et/ou une installation d'évacuation des copeaux, le bâti supérieur comprenant ladite poutre porteuse longitudinale et les éléments d'extrémité reliant cette poutre au bâti inférieur. De préférence, le bâti inférieur et le bâti supérieur sont réalisés en tubes métalliques soudés remplis de béton cellulaire, et le bâti inférieur comporte des pieds à coussins d'air.

Selon une forme de réalisation préférée, la poutre porteuse longitudinale est de section carrée, ses faces étant inclinées à 45° par rapport la verticale. Les faces supérieures de cette poutre porteuse longitudinale peuvent comporter des surfaces trempées et rectifiées.

De préférence, le support coulissant comporte des pinces pour porter la barre et la fixer rigidement de part et d'autre de la zone d'usinage. Ces pinces peuvent avantageusement être disposées de telle manière que l'axe de la barre soit situé dans le plan vertical contenant l'axe de la poutre porteuse longitudinale.

De préférence, le support coulissant porte deux unités d'usinage montées symétriquement par rapport à l'axe de la barre de matière première. Chaque unité d'usinage peut comporter au moins une broche associée à un moteur d'entraînement et un dispositif conçu pour déplacer cette broche par rapport au support coulissant selon trois axes orthogoaux X, Y et et Z un axe d'inclinaison A. La machine peut comporter des moyens pour engendrer des coussins d'air entre la poutre porteuse longitudinale et le support coulissant, en vue du déplacement du support par rapport a la poutre. De préférence, un dispositif pour apposer des repères d'indexage sur la barre est solidaire du support coulissant, en vue de centrer les unités d'usinage sur ces repères, grâce au mouvement du support coulissant le long de la poutre.

Chaque module d'usinage peut avantageusement comporter des moyens de commande numérique contrôlés par ordinateur, ces moyens étant agencés pour le stockage d'un programme.

La présente invention sera mieux comprise en référence à la description d'un exemple de réalisation préférée et du dessin annexé, dans lequel:

La fig. 1 représente une vue schématique en perspective d'un module d'usinage de la machine-outil modulaire selon l'invention,

La fig. 2 représente une vue en élévation du module d'usinage représenté par la fig. 1, et,

La fig. 3 représente schématiquement une machine comprenant trois modules d'usinage.

La machine-outil décrite se compose d'un ou de plusieurs modules d'usinage 10 juxtaposés dans le prolongement l'un de l'autre, ces modules d'usinage comportant chacun au moins un poste d'usinage destiné à usiner au moins partiellement la pièce directement dans la barre de matière première, de telle manière que cette pièce soit terminée ou quasi terminée à la sortie du dernier poste d'usinage du dernier module d'usinage de la machine-outil.

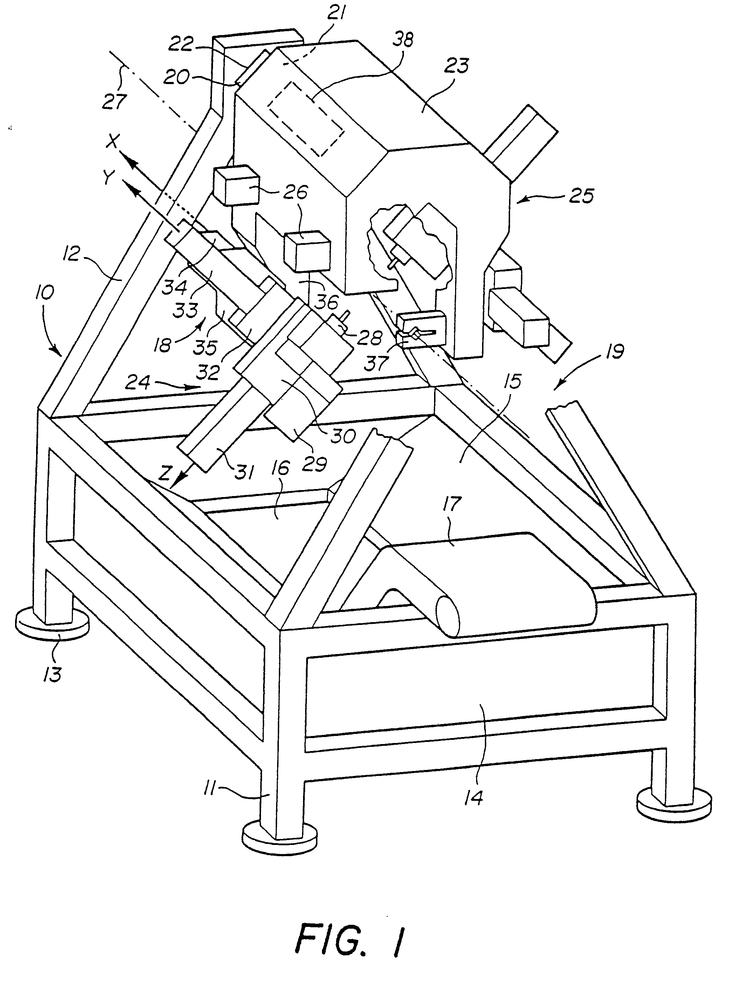

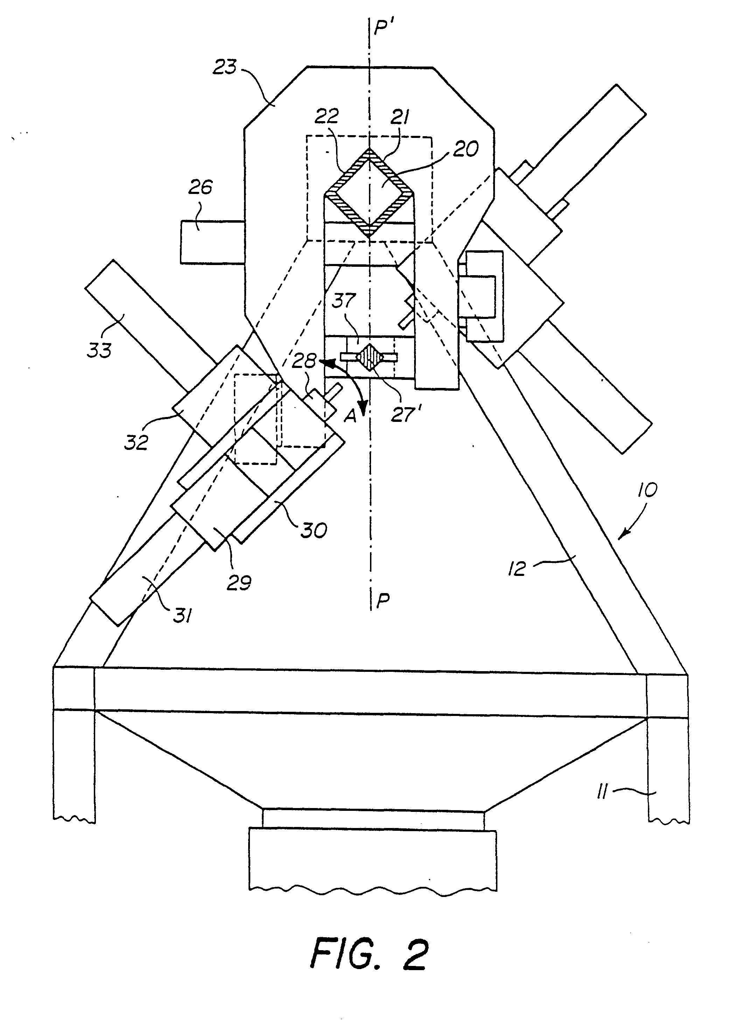

En référence aux figures 1 et 2, chaque module d'usinage 10 comporte un chassis rigide constitué avantageusement d'un bâti inférieur 11 en tubes d'acier, disposés de préférence selon les côtés d'un parallélépipède rectangle, et d'un bâti supérieur 12, disposé avantageusement selon les côtés d'un prisme accolé au bâti inférieur. Pour obtenir une structure particulièrement rigide conçue pour amortir les vibrations en cours de travail, tout en étant d'une fabrication facile et peu coûteuse, les tubes d'acier des bâtis inférieur et supérieur sont de préférence remplis de béton cellulaire. Leur forme est choisie de telle manière que plusieurs modules d'usinage peuvent être aisément juxtaposés. Le châssis repose de préférence sur quatre pieds 13 à coussins d'air qui permettent le déplacement rapide et aisé des différents modules d'usinage lors de la mise en place d'une chaîne d'usinage à plusieurs modules d'usinage, conçue pour la fabrication d'une série déterminée de pièces.

Le bâti inférieur constituant la base de la structure comporte des parois latérales 14 qui, associées à la structure tubulaire du bâti inférieur 11, forment un caisson susceptible de contenir différents équipements. Parmi ces équipements figure notamment l'installation de lubrification avec bac à huile et pompe à grand débit (non représentés), destinée à assurer une lubrification efficace de l'outillage monté sur les unités d'usinage. Parmi ces équipements figurent également des parois intérieures 15 inclinées par rapport à l'horizontale et destinées à diriger les copeaux vers une plage centrale 16 associée à une bande transporteuse ou un tapis élévateur 17 agencé pour déverser ces copeaux sur une installation d' évacuation (non représentée). Dans le cas où plusieurs modules d'usinage sont juxtaposés, l'installation d'évacuation, qui peut par exemple être constituée par une bande transporteuse se déplaçant perpendiculairement par rapport au tapis 17, est remplacée par une bande transporteuse de relais conçue pour reprendre les copeaux et les transférer en bout de ligne vers un bac unique d'où ils sont finalement évacués.

La structure prismatique du bâti supérieur 12 assure à l'ensemble une rigidité maximale, un encombrement relativement réduit pour un volume utile important. Les deux extrémités 18 et 19, en forme de triangles isocèles, du bâti supérieur sont reliées à leur extrémité supérieure par une poutre porteuse longitudinale horizontale 20 de section droite carrée, dont les faces sont inclinées à 45 degrés par rapport à la verticale. Les faces supérieures 21 et 22 présentent des surfaces trempées et rectifiées qui servent d'appui à un support coulissant 23, portant une paire d'unités d'usinage 24 et 25. Ce support coulissant est conçu pour pouvoir se déplacer sur coussins d'air le long des deux faces supérieures 21 et 22 de la poutre porteuse longitudinale 20, par des moyens connus tels que des vis sais fin. La fixation en position du support coulissant 23 par rapport à la poutre 20 peut s'effectuer au moyen d'éléments de blocage schématiquement représentés par les embouts 26.

Deux unités d'usinage 24 et 25 sont de préférence montées symétriquement par rapport à l'axe 27 de la barre de matière première (non représentée). Pour équilibrer les forces s'exerçant sur la barre, ces deux unités travaillent simultanément l'une à l'opposé de l'autre. Elles comportent chacune une ou plusieurs broches d'usinage 28 couplées à un ou plusieurs moteurs d'entraînement 29. Une ou plusieurs broches peuvent être équipées d'un changeur automatique d'outils.

Le moteur 29 est monté sur un support 30, mobile en translation sur la coulisse 31 définissant un axe Z. Cette coulisse est elle-même solidaire d'un second support 32 mobile en translation sur une seconde coulisse perpendiculaire à la précédente et définissant un axe Y. Cette seconde coulisse 33 est solidaire d'une troisième coulisse 34 définissant un axe X perpendiculaire au plan formé par les coulisses 31 et 33 et parallèle à la poutre porteuse longitudinale 20, qui peut se déplacer axialement à l'intérieur d'un troisième support 35, monté rigidement sur une protubérance latérale 36 du support coulissant 23. Les déplacements le long de ces coulisses de préférence du type "queue d'aronde", sont engendrés par des moteurs indépendants commandés individuellement par un ordinateur en fonction de la forme finale de la pièce à usiner. A cet effet, les éléments mobiles sont équipés de moteurs à courant continu asservis en courant et utilisant une tachogénératrice pour l'asservissement en vitesse. Une règle linéaire solidaire de chaque coulisse ou un encodeur rotatif (non représenté) est utilisée pour l'asservissement en position du support 30. Des vis à rouleaux satellites, de type connu en soi, servent de vérins de déplacement des supports le long des coulisses. En outre, chaque broche 28 est montée de préférence sur son support de manière à pouvoir basculer autour d'un axe transversal d'inclinaison, selon la double flèche A de la fig. 2. L'inclinaison maximale est égale à 45 degrés de chaque côté de la position droite de la broche.

Diverses broches 28 peuvent être montées sur le support 30 de l'unité d'usinage selon les opérations à effectuer. Ces opérations sont en générale les suivantes: perçage, alésage, fraisage, taraudage mécanique ou électronique. Le perçage est de préférence effectué par une commande numérique avec ou sans débourrage à l'aide de différentes routines standards. Le fraisage pourra être effectué en deux ou trois dimensions au moyen d'une interpolation linéaire ou circulaire. Le taraudage du type électronique "intelligent" s'effectue à l'aide des éléments suivants:

- une broche mécanique équipée de pinces servant à fixer le taraud pour lui permettre de tourner.
- La broche peut être montée sur un ensemble de ressorts qui la rend flottante par rapport à une butée médiane dans le sens avance-recul.
- La broche est entraînée par un moteur à courant continu asservi en vitesse (un potentiomètre permettant de régler la vitesse du taraud), et en couple (un potentiomètre permettant de régler la force de rotation du taraud).
- Le moteur à courant continu est avantageusement équipé d'un encodeur rotatif destiné à contrôler le nombre de tours. Le nombre de tours à effectuer par le taraud est programmé en nombre de tours entiers et en dixièmes de tour.

Pour le taraudage du type électronique, le support 30 fait avancer la broche 28 le long de la coulisse 31, selon l'axe Z jusqu'à ce que le taraud soit en appui sur le trou à tarauder et jusqu'à ce qu'un ressort soit armé. La commande numérique demande au moteur 29 de la taraudeuse de tourner du nombre de tours programmé. Le moteur effectue ce nombre de tours avec une force correspondant au réglage du couple. Si le couple programmé est plus faible que l'effort mécanique nécessaire pour effectuer le taraudage; le taraud tourne en arrière jusqu'à sa position de départ, puis repart en avant. Si après un nombre d'essais prédéterminé, le nombre de tours programmé ne peut pas être atteint, le taraud retourne à son point de départ et enclenche un signal d'alarme. En revanche, si ce nombre peut être atteint, les opérations suivantes du programme s'effectuent normalement.

Le barre de matière première de section carrée, rectangulaire, ronde ou profilée, matérialisée par son axe 27, est portée et bridée par des pinces 37 solidaires du support coulissant 23. Leur rôle consiste à bloquer la barre en amont et en aval de la zone à usiner dans laquelle la pièce est formée.

Pour permettre un repérage précis de la barre de matière première, on pratique dans cette barre des repères d'indexage constitués de préférence par des trous borgnes ou traversants ou par des fentes simples ou multiples percées ou fraisées tout au long de celle-ci. Ces repères peuvent être exécutés soit par l'unité d'usinage du premier module d'usinage de la machine, soit par un appareil spécifique monté sur ce module d'usinage ou disposé en amont. Un dispositif d'indexage (non représenté) est solidaire du support coulissant 23, immédiatement en aval ou en amont d'une des pinces 37. L'indexage s'effectuera au moyen de piges lorsque les repères seront des trous ou au moyen d'un index ou d'un peigne lorsque ceux-ci seront des fentes. Toutefois, ce dispositif d'indexage peut également être indépendant du module d'usinage, les barres introduites dans le module d'usinage ayant été indexées préalablement.

Les unités d'usinage 24, 25 comportant chacune une ou plusieurs broches 28 sont indexées par rapport à la barre soit par le déplacement sur coussin d'air du support coulissant 23 le long de la poutre de liaison 20, soit par une correction automatique de la position des broches 28, détectée au moyen d'un contrôle électronique et par l'asservissement du déplacement de ces broches selon l'axe X parallèle à la poutre porteuse longitudinale 20. Dans le premier cas, l'indexage s'effectue directement sur les repères portés par la barre. Le support coulissant 23 est ensuite bloqué en position au moyen des organes de serrage 26. Dans le deuxième cas, la commande numérique corrige son origine- programme alors que le support coulissant 23 reste bloqué en position sur la poutre porteuse longitudinale 20.

Cette disposition des organes unités d'usinage, dispositif d'indexage, pinces pour le blocage de la barre et la barre elle-même, forme un ensemble rigide et indépendant, utilisant la structure et sa poutre porteuse longitudinale 20 comme élément de guidage et de positionnement dans l'espace.

Pour travailler en commande numérique programmée, chaque module d'usinage comporte, de préférence sur le support coulissant 23, un équipement 38 de commande numérique contrôlée (CNC), comprenant naturellement une mémoire de programme. Les équipements 38 des modules d'usinage peuvent être reliés entre eux et/ou à un pupitre central de commande.

Chaque support coulissant 23 peut être enlevé de la poutre 20 et posé sur un autre module d'usinage, par exemple un module de préréglage qui est extérieur à la machine, ce qui permet un montage des outils hors du module de travail, le chargement en mémoire du programme relatif à la prochaine pièce à usiner, un essai de fonctionnement et éventuellement une correction automatique du programme, notamment en réponse à un équipement de mesure des diamètres et de la longueur de l'outil. On peut également tourner le support coulissant de 180 degrés. Ceci permet aux poches 28 d'atteindre deux autres faces perpendiculaires à celles atteintes dans la position primitive. Grâce à la marge d'inclinaison A de 90 degrés des deux broches 28 et grâce à cette possibilité de retournement du support coulissant, le champ d'inclinaison possible s'étend sur 360° dans le plan transversal de la barre.

Comme le montre plus particulièrement la fig. 2, la barre 27', de section carrée ou autre, traverse chaque module d'usinage dans une position telle que son axe 27 soit parallèle à l'axe de la poutre porteuse longitudinale 20 et situé dans le plan vertical PP' contenant l'axe de cette poutre. L'alimentation de la machine en barre s'effectue par exemple au moyen d'un plan incliné ou d'un dispositif connu commercialisé sous la dénomination HYDROBAR ®.

En ce qui concerne la gestion de la machine en cours de fonctionnement, nous noterons que chaque broche d'usinage peut être déplacée indépendamment selon ses axes X, Y, Z et A par sa commande. L'équipement informatique de chaque module d'usinage synchronise, par rapport à tous les autres composants, la machine modulaire complète au moyen d'un ordinateur central ou d'une commande programmable. Un support informatique tel qu'une bande magnétique, une bande perforée etc.. correspondant á chaque type de pièce à usiner, gère l'ensemble des composants de la machine.

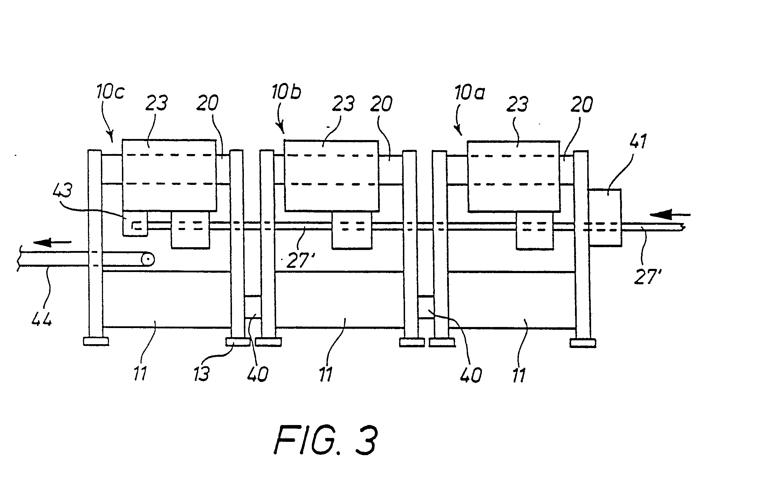

La fig. 3 illustre schématiquement la disposition d'une machine selon l'invention, comportant trois modules d'usinage successifs 10a, 10b et 10c qui sont alignés pour usiner une série de pièces déterminées dans une barre 27'. D'une manière générale, chacun des trois modules d'usinage comprend les organes essentiels décrits ci-dessus, notamment un support coulissant respectif 23 monté sur une poutre horizontale 20 propre à chaque module d'usinage. Les trois supports coulissants 23 peuvent être équipés d'outils différents. Pour assurer un alignement correct des trois modules d'usinage 10a à 10c, il est prévu simplement entre leurs bâtis inférieurs respectifs 11 des éléments d'alignement 40 qui peuvent être de simples organes de guidage, utilisés uniquement au moment où l'on amène un module d'usinage en le faisant glisser sur ses pieds coussins d'air 13, pour l'aligner par rapport au moule d'usinage précédent.

Dans l'exemple représenté, le premier module d'usinage 10a comporte un équipement complémentaire constitué par un appareil de marquage automatique 41 servant à placer des repères d'indexage sur la barre 27'. Cet appareil connu comporte notamment un jeu de mors fixes et un jeu de mors mobiles selon une course réglable qui est égale au pas des pièces le long de la barre, ainsi qu'une perceuse réalisant des trous d'indexage.

A l'autre bout de la machine, le module d'usinage 10c comporte un dispositif de coupe 43 qui est associé au support coulissant 23 et qui tronçonne la barre 27' pour en détacher les pièces complètement usinées, lesquelles sont évacuées par un convoyeur 44. Ce dispositif de coupe peut être associé à une unité d'usinage qui usine la face coupée de la barre après le tronçonnage.

Chaque module d'usinage est en mesure de travailler de façon totalement indépendante. A cet effet, il comporte son programme de commande numérique propre, ses propres moteurs d'entraînement des broches, ses propres organes d'asservissement, ses propres éléments de serrage et d'indexage et ses propres moyens de contrôle et de correction des diamètres et de longueurs d'outils.

L'utilisation d'une telle machine engendre les avantages suivants:

- elle assure un positionnement rapide et précis des unités d'usinage par rapport à la barre,
- elle permet de changer facilement des unités d'usinage par enlèvement des supports coulissants correspondants et grâce aux possibilités de préréglage et d'essai des unités hors de la machine,
- elle permet la mise en fabrication rapide de nouvelles séries de pièces grâce à l'emploi d'une machine d'usinage à caractère universel utilisant la commande numérique,
- elle permet de réduire les frais de mise en fabrication grâce à une réduction conséquente du nombre d'outillages et d'éléments de positionnement spécifiques,
- elle est peu coûteuse en main-d'oeuvre grâce au passage automatique de la barre d'un module d'usinage à l'autre sans intervention humaine,
- elle permet d'accroître la cadence de production, grâce à un nombre élevé d'outils engagés simultanément,
- elle permet de fabriquer des pièces de formes diverses et complexes grâce à la possibilité de passer la barre successivement à plusieurs reprises entre les modules d'usinage,
- elle autorise une réduction des stocks du fait de la souplesse et de la rapidité au lancement d'une nouvelle série de pièces, permettant la production en petites séries avec des renouvellements fréquents.
- La réduction des stocks permet de diminuer les immobilisations de capitaux ainsi que la diminution des surfaces de stockage.

La présente invention n'est pas limitée aux formes de réalisation décrites ci-dessus à titre d'exemple. En effet, elle s'étend à toutes modifications ou variantes comprises dans l'étendue des revendications et évidentes pour un homme de l'art.

**Revendications**

1. Machine-outil modulaire pour l'usinage de pièces en série dans une barre de matière première, cette machine comportant au moins un module d'usinage (10), un dispositif pour transporter et maintenir la barre (27') de matière première, et un dispositif pour apposer des repères d'indexage sur cette barre, ledit module d'usinage comportant des moyens de repèrage par rapport aux repères d'indexage sur la barre et au moins une unité d'usinage (24, 25) équipée d'organes d'entraînement indépendants conçus pour déplacer cette unité selon trois axes orthogonaux par rapport à la barre de matière première, caractérisée en ce que le module d'usinage (10) comporte un châssis rigide (11, 12) équipé d'une poutre porteuse longitudinale (20), rectiligne et disposée parallèlement à la barre de matière première (27') agencée pour supporter ladite unité d'usinage (24, 25) et pour assurer, le cas échéant, la liaison rigide entre plusieurs modules d'usinage, et en ce que ladite unité d'usinage (24, 25) est montée sur un support coulissant (23) ayant la forme générale d'un U renversé, disposé à cheval sur la poutre porteuse longitudinale (20).

2. Machine-outil selon la revendication 1, caractérisée en ce que ledit châssis rigide comporte un bâti inférieur (11) formant un caisson et un bâti supérieur (12) en forme de prisme, le bâti inférieur (11) étant conçu pour contenir au moins une installation de lubrification et/ou une installation d'évacuation des copeaux, le bâti supérieur (12) comprenant ladite poutre porteuse longitudinale (20) et des éléments d'extrémité (18, 19) reliant cette poutre au bâti inférieur.

3. Machine-outil selon la revendication 2, caractérisée en ce que le bâti inférieur (11) et le bâti supérieur (12) sont réalisés en tubes métalliques soudés remplis de béton cellulaire, et en ce que le bâti inférieur comporte des pieds à coussins d'air (13).

4. Machine-outil selon la revendication 1, caractérisée en ce que la poutre porteuse longitudinale (20) est de section carrée, ses faces étant inclinées à 45 degrés par rapport à la verticale.

5. Machine-outil selon la revendication 4, caractérisée en ce que les faces supérieures (21 et 22) de la poutre porteuse longitudinale (20) comportent des surfaces trempées et rectifiées.

6. Machine-outil selon la revendication 1, caractérisée en ce que le support coulissant (23) comporte des pinces (37) pour porter la barre et la fixer rigidement de part et d'autre de la zone d'usinage.

7. Machine-outil selon la revendication 6, caractérisé en ce que les pinces (37) sont disposées de telle manière que l'axe (27) de la barre (27') soit situé dans le plan vertical contenant l'axe de la poutre porteuse longitudinale (20).

8. Machine-outil selon la revendication 6, caractérisé en ce que ledit support coulissant (23) porte deux unités d'usinage (24, 25) montées symétriquement par rapport à l'axe (27) de la barre de matière première (27').

9. Machine-outil selon la revendication 8, caractérisée en ce que chaque unité d'usinage (24 ou 25) comporte au moins une broche (28) associée un moteur d'entraînement (29) et un dispositif conçu pour déplacer cette broche par rapport au support coulissant (23) selon trois axes orthogonaux (X, Y, Z) et un axe d'inclinaison (A).

10. Machine-outil selon la revendication 6, caractérisée en ce qu'elle comporte des moyens pour engendrer des coussins d'air entre la poutre porteuse longitunale (20) et le support coulissant (23), en vue du déplacement du support par rapport à la poutre.

11. Machine-outil selon la revendication 10, caractérisée en ce qu'un dispositif pour apposer des repères d'indexage de la barre est solidaire du support coulissant (23), en vue de centrer les unités d'usinage (24, 25) sur ces repères, grâce au mouvement du support coulissant le long de la poutre (20).

12. Machine-outil selon l'une quelconque des revendications précédentes, caractérisé en ce que chaque module d'usinage comporte des moyens (38) de commande numérique contrôlés par ordinateur, ces moyens étant agencés pour le stokkage d'un programme.

**Patentansprüche**

1. Aus Bauteilen zusammengesetze Werkzeugmaschine für die Bearbeitung in Serien von Teilen aus einer Stange, bestehend aus mindestens einem Bearbeitungsblock (10), einer Vorrichtung für den Transport und das Festhalten der Werkstoffstange (27') und einer Einrichtung für das Anbringen von Marken zur Kennzeichnung auf dieser Stange, wobei der Bearbeitungsblock Einrichtungen für das Erfassen der Marken für die Kennzeichnung auf der Stange und mindestens eine Bearbeitungseinheit (24, 25) enthält, die mit unabhängigen Antriebsorganen versehen ist, die ausgelegt sind, um gegenüber der Werkstoffstange die Bearbeitungseinheit nach drei orthogonalen Achsen zu verstellen, dadurch gekennzeichnet, daß der Bearbeitungsblock (10) einen starren Rahmen (11, 12) enthält, der mit einem Tragbalken in Längsrichtung (20) versehen ist, der geradlinig, parallel zu der Werkstoffstange (27') angeordnet, für die Abstützung der Bearbeitungseinheit (24, 25) eingerichtet ist, und um eventuell die starre Verbindung zwischen mehreren Bearbeitungsblöcken sicherzustellen, und daß die besagte Bearbeitungseinheit (24, 25) auf einem gleitenden Sockel (23) aufgebaut ist, der die allgemeine Form eines umgekehrten U hat und auf dem Tragbalken in Längsrichtung (20) rittlings angeordnet ist.

2. Werkzeugmaschine gemäß Anspruch 1, dadurch gekennzeichnet, daß der starre Rahmen aus einem unteren Ständer (11), der einen Kasten bildet, und aus einem oberen Ständer (12), der eine prismatische Form aufweist, besteht, wobei der unter Ständer ausgelegt ist, um mindestens eine Einrichtung für die Schmierung und/oder eine Einrichtung für die Beseitigung der Späne zu enthalten, wobei der obere Ständer (12) den Tragbalken in Längsrichtung (20) und Endstücke (18, 19), die diesen Balken mit dem unteren Ständer verbinden, enthält.

3. Werkzeugmaschine gemäß Anspruch 2, dadurch gekennzeichnet, daß der untere Ständer (11) und der obere Ständer (12) aus geschweißten metallischen Rohren ausgeführt ist, die mit Zellenbeton gefüllt sind, und daß der untere Ständer Füsse mit Luftkissen (13) enthält.

4. Werkzeugmaschine gemäß Anspruch 1, dadurch gekennzeichnet, daß der Tragbalken in Längsrichtung (20) einen quadratischen Querschnitt aufweist, wobei seine Seiten gegenüber der Senkrechten um 45 Grad geneigt sind.

5. Werkzeugmaschine gemäß Anspruch 4, dadurch gekennzeichnet, daß die oberen Seiten (21 und 22) des Tragbalkens in Längsrichtung (20) gehärtete und geschliffene Oberflächen aufweisen.

6. Werkzeugmaschine gemäß Anspruch 1, dadurch gekennzeichnet, daß der gleitende Sockel (23) Zangen (37) enthält, um die Werkstoffstange zu tragen und sie beiderseits des Bearbeitungsbereichs festzuhalten.

7. Werkzeugmaschine gemäß Anspruch 6, dadurch gekennzeichnet, daß die Zangen (37) derart angeordnet sind, daß die Achse (27) der Werkstoffstange (27') in der senkrechten Ebene, die die Achse des Tragbalkens in Längsrichtung enthält, liegt.

8. Werkzeugmaschine gemäß Anspruch 6, dadurch gekennzeichnet, daß der gleitende Sockel (23) zwei Bearbeitungseinheiten (24, 25) trägt, die gegenüber der Achse (27) der Werkstoffstange (27') symmetrisch positioniert sind.

9. Werkzeugmaschine gemäß Anspruch 8, dadurch gekennzeichnet, daß jede Bearbeitungseinheit (24 oder 25) mindestens eine Spindel (28) enthält, die mit einem Antriebsmotor (29) und einer Einrichtung verbunden ist, die ausgelegt ist, um diese Spindel gegenüber dem gleitenden Sockel (23) nach drei orthogonalen Achsen (X, Y, Z) und einer Neigungsachse (A) zu verstellen.

10. Werkzeugmaschine gemäß Anspruch 6, dadurch gekennzeichnet, daß sie Einrichtungen enthält, um zwischen dem Tragbalken in Längsrichtung (20) und dem gleitenden Sockel (23) Luftkissen für die Verstellung des Sockels gegenüber dem Tragbalken zu erzeugen.

11. Werkzeugmaschine gemäß Anspruch 10, dadurch gekennzeichnet, daß eine Einrichtung für das Anbringen der Marken auf der Stange mit dem gleitenden Sockel (23) verbunden ist, um mit Hilfe der Verstellung des gleitenden Sockels entlang des Balkens (20) die Bearbeitungseinheiten (24, 25) auf diese Marken zu zentrieren.

12. Werkzeugmaschine gemäß irgendeinem der vorstehenden Ansprüche, dadurch gekennzeichnet, daß jeder Bearbeitungsblock Einrichtungen (38) für eine numerische Steuerung enthält, die von einem Computer überwacht sind, wobei diese Einrichtungen für das Speichern eines Programms eingerichtet sind.

## Claims

1. Modular machine tool for machining series of parts from a bar of raw material, the machine comprising at least one machining module (10), a device for transporting and maintaining the bar (27') of raw material, and a device for placing index marks on this bar, said machining module comprising marking means with respect to the index marks on the bar and at least one machining unit (24, 25) equipped with independent drive means adapted to displace this unit along three orthogonal axes with respect to the bar of raw material, characterized in that the machining module (10) comprises a rigid chassis (11, 12) equipped with a longitudinal carrying beam (20), rectilinear and disposed parallel to the bar of raw material (27') adapted for supporting said machining module (24, 25) and mounted on a sliding support (23) generally shaped in the form of an inverted U, disposed astride on the longitudinal carrying beam (20).

2. Machine tool according to claim 1, characterized in that said chassis comprises a lower frame (11) forming a case and an upper prism-shaped frame (12), the lower frame (11) being designed to contain at least one lubricating unit and/or a unit for the removal of chips, the upper frame (12) comprising said longitudinal carrying beam (20) and end elements (18, 19) connecting this beam to the lower frame.

3. Machine tool according to claim 2, characterized in that said lower frame (11) and said upper frame (12) are made of welded metallic tubes filled with cellular concrete, and in that said lower frame comprises feet provided with air cushion means (13).

4. Machine tool according to claim 1, characterized in that said longitudinal carrying beam (20) is of square section, its faces being inclined at 45° with respect to the vertical.

5. Machine tool according to claim 4, characterised in that the upper faces (21, 22) of said longitudinal carrying beam (20) comprises tempered and precision-ground surfaces.

6. Machine tool according to claim 1, characterized in that the sliding support (23) comprises clamps (37) for carrying the bar and for rigidly fixing it on either side of said machining station.

7. Machine tool according to claim 6, characterized in that said clamps (37) are disposed in such a manner that the axis (27) of said bar (27') is situated in the vertical plane containing the axis of said longitudinal carrying beam (20).

8. Machine tool according to claim 6, characterized in that said sliding support (23) carries two machining units (24, 25) mounted symmetrically with respect to the axis (27) of the bar of raw material (27').

9. Machine tool according to claim 8, characterized in that each said machining unit (24 or 25) comprises at least one spindle (28) associated with a driving motor (29) and a device designed to displace this spindle with respect to said sliding support (23) along three orthogonal axes (X, Y, Z) and an axis of inclination (A).

10. Machine tool according to claim 6, characterized in that it comprises means for creating air cushions between said longitudinal carrying beam (20) and said sliding support (23), in order to provide for displacement of said support with respect to said beam.

11. Machine tool according to claim 10, characterized in that a device placing index marks of said bar is solid with said sliding support (23), in order to center said machining units (24, 25) on these marks, by movement of said sliding support along said beam (20).

12. Machine tool according to any one of the preceding claims, characterized in that each said machining module comprises means (38) for computerized numerical control, said means being provided for storing a program.

FIG. 1

1

FIG. 2

FIG. 3